# EUROPEAN PATENT SPECIFICATION

(11) **EP 2 715 530 B1**
(45) Date of publication and mention of the grant of the patent: **23.01.2019**
(21) Application number: 11866553.8
(22) Date of filing: 09.10.2011
(51) Int. Cl.: G06F 3/0481, G06F 9/44, G06F 3/0484

(54) **APPLICATION NOTIFICATION DISPLAY**
ANWENDUNGSBENACHRICHTIGUNGSANZEIGE
AFFICHAGE DE NOTIFICATIONS D'APPLICATION

(30) Priority: 27.05.2011 US 201113118292
(43) Date of publication of application: 09.04.2014
(73) Proprietor: Microsoft Technology Licensing, LLC, Redmond, WA 98052 (US)
(72) Inventor: DONAHUE, Tyler J., Redmond, Washington 98052-6399 (US); MCNEIL, Brian K., Redmond, Washington 98052-6399 (US); REINIGER, Kiernon S., Redmond, Washington 98052-6399 (US); ZAMAN, Nazia, Redmond, Washington 98052-6399 (US); RAWAT, Anshul, Redmond, Washington 98052-6399 (US); IVANOVIC, Relja, Redmond, Washington 98052-6399 (US)
(74) Representative: Goddar, Heinz J.
(86) International application number: PCT/US2011/055522
(87) International publication number: WO 2012/166181

(56) References cited:
- EP-A1- 1 939 718
- GB-A- 2 350 991
- US-A1- 2002 161 634
- US-A1- 2004 155 908
- US-A1- 2008 107 057
- US-A1- 2008 222 545
- US-A1- 2009 293 013
- US-A1- 2009 305 732
- US-A1- 2010 329 642

## Description

### BACKGROUND

The pervasiveness of computing devices is ever increasing. For example, users may interact with a traditional desktop computer, a tablet computer, a mobile phone, and so on to access a variety of functionality for work and personal uses. Additionally, the variety of functionality that is available to users of these devices also continues to increase.

This is especially true in the case of applications. Applications availability was traditionally limited as user's typically purchased the applications from a "bricks and mortar" store. With the advent of application availability via the Internet, the number of applications that are made available to a user increased along with the ease at which the user could access these applications. Accordingly, users may chose and install a large number of applications on the users' computing device.

However, interaction by a user with the applications may be hindered by the number of applications that are installed on the computing device. This may include locating an application of interest as well as accessing functionality of the application. For instance, a user may select a weather application to get weather information, then interact with a news application to catch up on the latest news, and so on through a number of other applications. Consequently, navigation through these applications to locate desired information may take a significant amount of time, which may be further complicated by the number of applications that are available on the computing device.

US2004/0155908 A1 discloses a system and method of navigating a mobile device display including highlighting a first icon in a main portion of the mobile device display. A context-based display presents services and applications to users utilizing icons. The icons are displayed in various locations on the context-based display dependent on predicted usage. Furthermore information icon labels are provided that present specific information regarding the state of that particular service or application as it applies to the user.

US2010/0329642 A1 discloses dynamic icons associated with remote content. The dynamic icons provide one or more pieces of information to a user by changing the appearance of the icon based on changes to data of a data source associated with the icon. The icon may be dynamically updated based on user information or device information.

US2009/0293013 A1 discloses a computing device including a display and a processor coupled to the display and configured to display a plurality of items of information. The device may be configured to provide a data feed that includes a plurality of images on the display. The images may be items of information on message items that relate to a messaging application or may be items of information or message items that convey a message to a user.

EP 1 939 718 A1 discloses a terminal device including a display unit having a function for displaying a menu screen on a display screen, a selection unit for causing the user to select one of the items in the menu screen displayed on the display screen and a holding unit holding status information concerning at least one application among a plurality of applications. The display unit displays an item indicating the application on the display screen while presenting status information on the application held in the holding unit of the display screen.

GB 2 350 991 A discloses a method and system in which the icons of running application programs can be easily identified and even beginners can easily understand how to close application programs. The icons of applications programs which are not running are displayed by still pictures but the icons of running application programs are displayed in animation which changes periodically, thereby to enable the running application programs to be identified at a glance of the displayed list of icons.

### SUMMARY

The scope of the present invention is defined by the appended claims. Embodiments which do not fall within the scope of the claims do not describe part of the present invention.

Application notification display techniques are described. Implementations are described in which a representation of an application may include notifications that pertain to the application. Techniques are further described which may be used to manage the notifications, including replacement of notifications, use of queues, overrides, selection of notifications based on execution state of an application, cycling a display of a plurality of notifications (e.g., by a user or automatically by a computing device), cycling a display of different subsets of notifications, examination of a manifest of an application to determine criteria to be used to display the notifications, display priority of the notifications, and so on.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

### BRIEF DESCRIPTION OF THE DRAWINGS

The detailed description is described with reference to the accompanying figures. In the figures, the left-most digit(s) of a reference number identifies the figure in which the reference number first appears. The use of the same reference numbers in different instances in the description and the figures may indicate similar or identical items.
FIG. 1 is an illustration of an environment in an example implementation that is operable to employ application notification techniques.
FIG. 2 depicts a system in an example implementation in which a plurality of notifications is displayed successively as part of a representation of an application.
FIG. 3 depicts a system in which a tag is utilized to specify that a corresponding notification is to be used to replace another notification.
FIG. 4 is a flow diagram depicting a procedure in an example implementation in which a queue is used to manage notifications for output as part of a representation of an application.
FIG. 5 is a flow diagram depicting a procedure in an example implementation in which tags are used to manage replacement of notifications for display as part of a representation of an application.
FIG. 6 is a flow diagram depicting a procedure in an example implementation in which a queue is used to manage notifications for display as part of a representation of an application.
FIG. 7 is a flow diagram depicting a procedure in an example implementation in which an execution state of an application is used as a basis for determining which notifications are to be displayed as part of a representation of the application.
FIG. 8 is a flow diagram depicting a procedure in an example implementation in which notifications are displayed within representations of applications that are selectable to launch the application, the display cycled to display the notifications in succession.
FIG. 9 is a flow diagram depicting a procedure in an example implementation in which subsets of notifications are cycled for display as part of respective representations of applications.
FIG. 10 is a flow diagram depicting a procedure in an example implementation in which in which a manifest of an application is utilized to specify criteria to be used to manage display of notifications as part of a representation of an application.
FIG. 11 is a flow diagram depicting a procedure in an example implementation in which a web service is utilized to manage provision of notifications to a client device for display.
FIG. 12 is a flow diagram depicting a procedure in an example implementation in which notifications are prioritized for display as part of a representation of an application.

### DETAILED DESCRIPTION

### Overview

Application notifications may be used by applications to display information in a representation of the application (e.g., icon, tile, and so on) without having the user specifically launch the application. For example, a representation of a weather application may include a notification that describes current weather conditions. However, conventional techniques that were utilized to display a notification were often static and therefore did not allow developers to control how the notifications were displayed as part of the representation.

Techniques are described herein, however, that may be used to manage notifications. Additionally, in one or more implementations these techniques may be performed without executing a corresponding application, thereby conserving battery life and increasing performance of computing devices that perform these techniques. The following sections describe examples of a variety of different techniques that relate to application notifications, such as replacement of notifications, use of queues, overrides, selection of notifications based on execution state of an application, cycling a display of a plurality of notifications, cycling a display of different subsets of notifications, examination of a manifest of an application to determine criteria to be used to display the notifications, display priority of the notifications, and so on. Further discussion of these techniques and others may be found in the following sections.

In the following discussion, an example environment is first described that may employ the techniques described herein. Example procedures are then described which may be performed in the example environment as well as other environments. Consequently, performance of the example procedures is not limited to the example environment and the example environment is not limited to performance of the example procedures.

### Example Environment

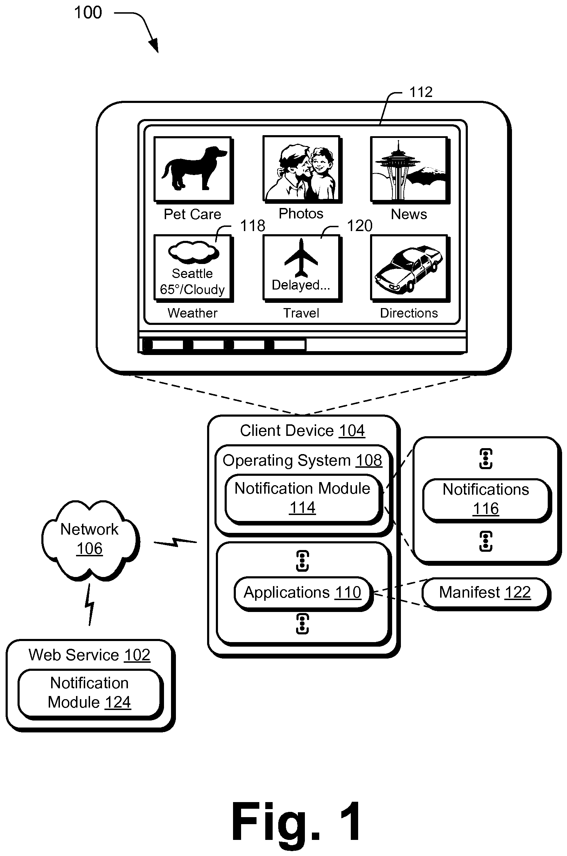

FIG. 1 is an illustration of an environment 100 in an example implementation that is operable to employ techniques described herein. The illustrated environment 100 includes a web service 102 and a client device 104 that are communicatively coupled via a network 106. The web service 102 and the client device 104 may be implemented by a wide range of computing devices.

For example, a computing device may be configured as a computer that is capable of communicating over the network 106, such as a desktop computer, a mobile station, an entertainment appliance, a set-top box communicatively coupled to a display device, a mobile communication device (e.g., a wireless phone as illustrated for the client device 104), a game console, and so forth. Thus, a computing device may range from full resource devices with substantial memory and processor resources (e.g., personal computers, game consoles) to a low-resource device with limited memory and/or processing resources (e.g., traditional set-top boxes, hand-held game consoles). Additionally, a computing device may be representative of a plurality of different devices, such as multiple servers utilized by a business to perform operations, a remote control and set-top box combination, an image capture device and a game console configured to capture gestures, and so on.

Although the network 106 is illustrated as the Internet, the network may assume a wide variety of configurations. For example, the network 106 may include a wide area network (WAN), a local area network (LAN), a wireless network, a public telephone network, an intranet, and so on. Further, although a single network 106 is shown, the network 106 may be configured to include multiple networks.

The client device 104 is further illustrated as including an operating system 108. The operating system 108 is configured to abstract underlying functionality of the client 104 to applications 110 that are executable on the client device 104. For example, the operating system 108 may abstract processing, memory, network, and/or display functionality of the client device 104 such that the applications 110 may be written without knowing "how" this underlying functionality is implemented. The application 110, for instance, may provide data to the operating system 108 to be rendered and displayed by the display device 112 without understanding how this rendering will be performed.

The operating system 108 may also represent a variety of other functionality, such as to manage a file system and a user interface that is navigable by a user of the client device 104. An example of this is illustrated as an application launcher (e.g., desktop) that is displayed on the display device 112 of the client device 104. The desktop includes representations of a plurality of the applications 110, such as icon, tiles, textual descriptions, and so on. The desktop may be considered a root level of a hierarchical file structure. The representations shown in the illustrated example are selectable to launch a corresponding one of applications 110 for execution on the client device 104. In this way, a user may readily navigate through a file structure and initiate execution of applications of interest.

The operating system 108 is also illustrated as including a notification module 114. The notification module 114 is representative of functionality to manage notifications 116 that are to be displayed as part of the representations of the applications. For example, a representation 118 of a weather application is illustrated as including a notification that indicates a name and current weather conditions, e.g., "Seattle 65°/Cloudy." Likewise, a representation 120 for a travel application is illustrated as including a notification that indicates that a current flight status is "delayed." In this way, a user may readily view information relating to the applications 110 without having to launch and navigate through each of the applications. Although representations of specific applications are shown, other representations of applications are also contemplated, such as a representation of an application that references a user's involvement with a service, e.g., a friend in a social network service.

In one or more implementations, the notifications 116 may be managed without executing the corresponding applications 110. For example, the notification module 114 may receive the notifications 116 from a variety of different sources, such as from software (e.g., other applications executed by the client device 104), from a web service 102 via the network 106, and so on. The notification module 114 may then manage how the notifications 116 are displayed as part of the representations without executing the applications 110. This may be used to improve battery life and performance of the client device 104 by not running each of the applications 110 to output the notifications 116.

Additionally, the notification module 114 may support techniques to allow developers of the respective applications 110 to specify how the notifications 116 are to be displayed as part of the representation of the applications 110. For example, the notification module 114 may examine a manifest 122 of an application 110, such as an install manifest used to install the application 110, at runtime using a system call, and so on. The manifest 110 may describe how and when the notifications 116 are to be displayed as well as how the notifications 116 are to be managed to determine which notifications 116 are to be displayed.

The notification module 114 may also utilize a variety of other techniques to enable a developer or other entity to specify how the notifications 116 are to be displayed and managed. For instance, the notifications 116 may be communicated along with corresponding tags that specify how the notifications 116 are to be displayed and/or managed. Thus, an originator of the tags may specify how corresponding notifications 116 are to be displayed or managed. This may be performed to enable a variety of different functionality as further described in the following sections.

Although this discussion described incorporation of the notification module 114 at the client, functionality of the notification module 114 may be implemented in a variety of ways. For example, functionality of a notification module 124 may be incorporated by the web service 102 in whole or in part. The notification module 124, for instance, may process notifications received from other web services and manage the notifications for distribution to the client device 104 over the network 106.

A variety of different techniques may be utilized by the notification module 124, such as to process the notifications according to techniques that would be employed by the client device 104, itself, such as to examine a manifest, process tags, responsive to a communication received from the client device 104 that specifies the criteria to manage the notifications 116, and so on. Further, this processing may be performed in instances in which the client device 104 is unavailable, such as due to lack of a network 106 connection. In this way, the web service 102 may make efficient use of storage space and network 106 bandwidth. Other examples are also contemplated, such as to distribute the functionality of the notification module 114 between the client device 104 and the web service 102, incorporate a third-party service, and so on.

Generally, any of the functions described herein can be implemented using software, firmware, hardware (e.g., fixed logic circuitry), or a combination of these implementations. The terms "module," "functionality," and "logic" as used herein generally represent software, firmware, hardware, or a combination thereof. In the case of a software implementation, the module, functionality, or logic represents program code that performs specified tasks when executed on a processor (e.g., CPU or CPUs). The program code can be stored in one or more computer readable memory devices. The features of the techniques described below are platform-independent, meaning that the techniques may be implemented on a variety of commercial computing platforms having a variety of processors.

For example, a computing device may also include an entity (e.g., software) that causes hardware of the computing device to perform operations, e.g., processors, functional blocks, and so on. For example, the computing device may include a computer-readable medium that may be configured to maintain instructions that cause the computing device, and more particularly hardware of the computing device to perform operations. Thus, the instructions function to configure the hardware to perform the operations and in this way result in transformation of the hardware to perform functions. The instructions may be provided by the computer-readable medium to the computing device through a variety of different configurations.

One such configuration of a computer-readable medium is signal bearing medium and thus is configured to transmit the instructions (e.g., as a carrier wave) to the hardware of the computing device, such as via a network. The computer-readable medium may also be configured as a computer-readable storage medium and thus is not a signal bearing medium. Examples of a computer-readable storage medium include a random-access memory (RAM), read-only memory (ROM), an optical disc, flash memory, hard disk memory, and other memory devices that may use magnetic, optical, and other techniques to store instructions and other data.

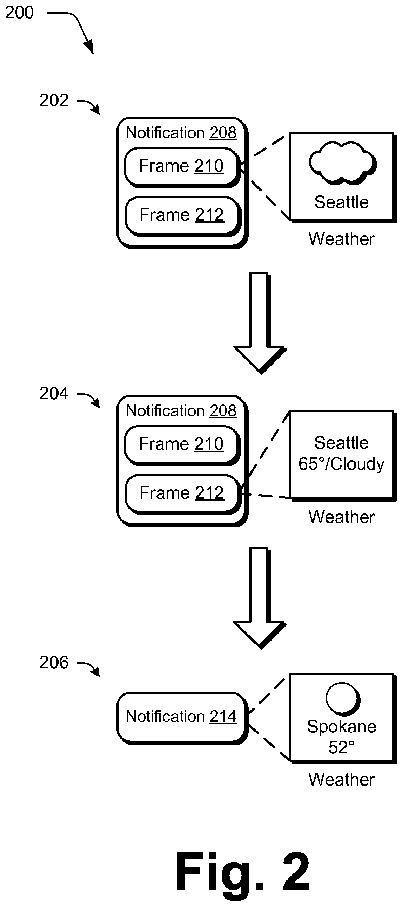

FIG. 2 depicts a system 200 in an example implementation in which a plurality of notifications are displayed successively as part of a representation of an application. The system 200 is illustrated through use of first, second, and third stages 202, 204, 206. Notifications 116 may take a variety of forms and arranged in a variety of ways for display as part of the representation 118.

As illustrated in FIG. 2, for instance, a notification 208 having a plurality of frames 210, 212 is shown. At the first stage 202, a first 210 of the frames of the notification 208 is used to display a graphical depiction of a cloud and the text "Seattle" for a representation of a weather application.

At the second stage 204, a second 212 of the frames of the notification 208 is used to display text "Seattle" and text "65°/Cloudy" to describe additional current weather conditions for Seattle. Thus, the notification 208 may be configured to include frames 210, 212 that are to be displayed successively as part of the representation 118.

Additional notifications may also be displayed in succession as part of the representation 118. As shown at the third stage 206, for instance, a notification 214 is used to display graphics and text of a sun and current weather conditions for "Spokane, 52°." Thus, in this example system 200 the notification module 114 may be used to cycle through notifications 208, 214 for display as part of the representation 118 of an application 110. As previously stated, the management of the notifications 116 may be performed using a variety of techniques, an example of which involving tags is described in relation to the following figure.

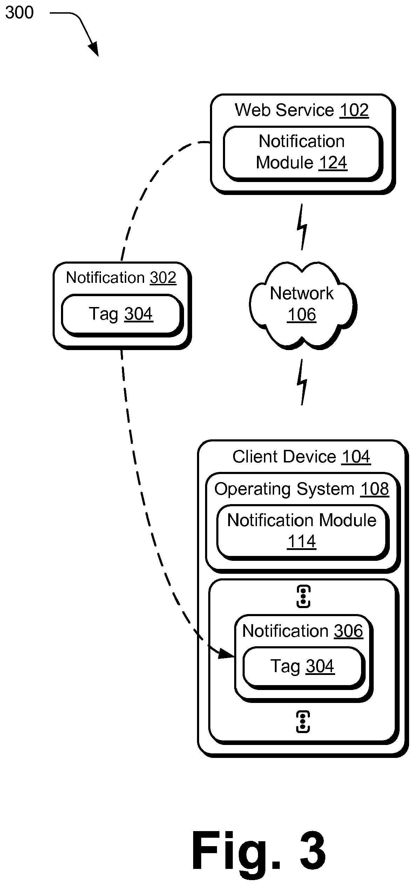

FIG. 3 depicts a system 300 in which a tag is utilized to specify that a corresponding notification is to be used to replace another notification. The web service 102 is illustrated as being communicatively coupled to the client device 104 via the network 106 as previously described in relation to FIG. 1. In this example, the web service 102 communicates a notification 302 and a corresponding tag 304 to the client device 104.

Upon receipt of the notification 302, the notification module 114 may determine that there is a corresponding tag 304. Accordingly, the notification module 114 may examine storage that is local to the client device 104 to determine whether another notification 306 has a matching tag.

In the illustrated example, notification 306 includes a tag 304 that matches the tag 304 of the received notification 302. Accordingly, the notification module 114 may replace the notification 306 with the later received notification 302. In this way, an originator of the tag 302 may readily replace one notification with another through the use of tags.

The tag 304 may be specified in a variety of ways. For instance, the tag 304 may be configured such that a value of the tag 304 may be assigned by an originator of the tag from any value. Thus, in this example the notification module 114 may manage replacement of the notifications without "knowing" what the corresponding tags "mean." A variety of other examples are also contemplated, such as to specify a particular slot in a queue, an example of which is described in relation to the following figure. Although this functionality was described in relation to the notification module 114 of the client device 104, as previously stated this functionality may be incorporated using a variety of different devices, an example of which is shown by the notification module 124 of the website 102.

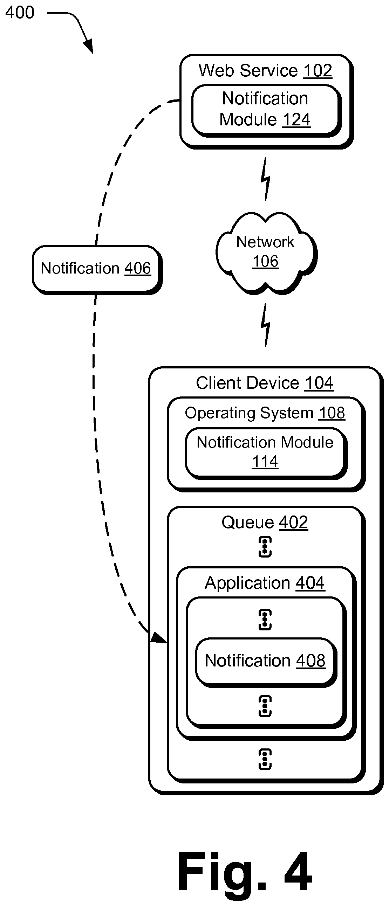

FIG. 4 depicts a system 400 in an example implementation in which a queue is used to manage notifications 116 for output as part of a representation of an application. As before, the client device 104 is communicatively coupled to the web service 102 via a network 106. The client device 104 includes a notification module 114 that in this instance is illustrated as part of an operating system 108.

The client device 104 is also illustrated as including a queue 402 that is configured to stored notifications 116 for respective applications 404. The queue 402, for instance, may be configured to store a maximum number of notifications 116 for particular applications and thus is illustrated as "within" the application 404 in the queue 402 in the figure. It should be readily apparent, however, that the queue 402 may be configured in a variety of ways.

The notification module 114 may manage the notifications 116 using the queue 402 in a variety of ways. For example, the notification may employ a "first in/first out" (FIFO) technique to manage the notifications 116, a "last in/first out" technique, and so on. For instance, the notification module 114 may receive a notification 406 that specifies a particular slot within the queue 402. The slots, for instance, may describe a priority in which the notifications 116 are to be displayed as part of the representation. Further management techniques may leverage this specification, such as to move previous notifications 116 "downward" in priority such that a notification having the lowest priority is removed, to replace a notification 408 in the slot with the received notification 406 and preserve the ordering otherwise, and so on. Other techniques are also contemplated, such as to leverage an override command as further described in the example procedures.

### Example Procedures

The following discussion describes notification techniques that may be implemented utilizing the previously described systems and devices. Aspects of each of the procedures may be implemented in hardware, firmware, or software, or a combination thereof. The procedures are shown as a set of blocks that specify operations performed by one or more devices and are not necessarily limited to the orders shown for performing the operations by the respective blocks. In portions of the following discussion, reference will be made to the example environment.

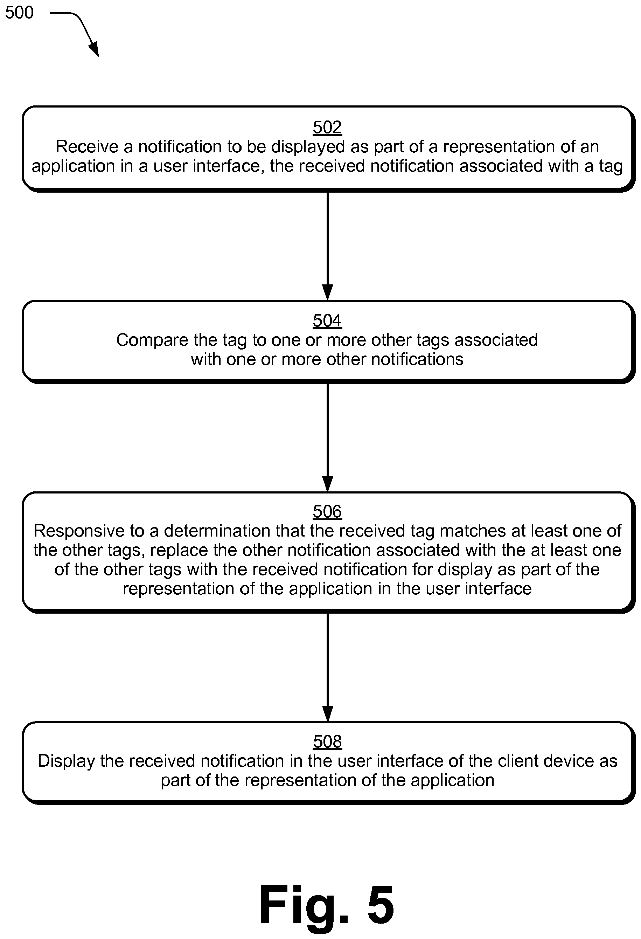

FIG. 5 depicts a procedure 500 in an example implementation in which tags are used to manage replacement of notifications for display as part of a representation of an application. A notification is received that is to be displayed as part of a representation of an application in a user interface, the notification associated with a tag (block 502). For example, the notification may be received at a notification module 114 of the client device 104 from an application executed on the client device 104, from a web service, and so on. In another example, the notification module 124 of the web service 102 may receive the notification from another web service and manage storage and distribution of the notification to the client device 104. A variety of other examples are also contemplated.

The tag of the notification is compared to one or more other tags associated with one or more other notifications (block 504). The notification module 114, for instance, may compare the tag for the notification for an application to tags of other notifications for that application to find a match.

Responsive to a determination that the received tag matches at least one of the other tags, the other notification is replaced that is associated with the at least one of the other tags with the received notification for display as part of the representation of the application in the user interface (block 506). For example, the notification module 114 may compare text strings of tags in the respective notifications to determine whether they match. Thus, in this example the text strings need not be "known" as far as "what they do or represent" to the notification module 114 to avail themselves of the replacement functionality. In this way, the notification module 114 may support varied definitions and tag identifiers and still support the replacement functionality described herein.

The received notification may then be displayed in the user interface of the client device as part of the representation of the application (block 508). The display may be performed in a variety of ways, such as part of a cycling display as described in relation to FIG. 2, a static display, a display of a representation that is selectable to launch a represented application (e.g., a tile in a application launcher output by the operating system 108), and so forth.

Additionally, the notification may be leveraged to launch a corresponding application in a context of the notification. For example, if a user installs a news application, selecting the representation of the application would launch the application to the 'home' or 'default' state of the application. In the new application example, to the front page of the paper. However, if the news application receives a notification about an earthquake and the user selected that notification, the news application may then launch in the context of that notification. For instance, the news application could be launched directly to the article about the earthquake and "skip" the home page. A variety of other examples are also contemplated.

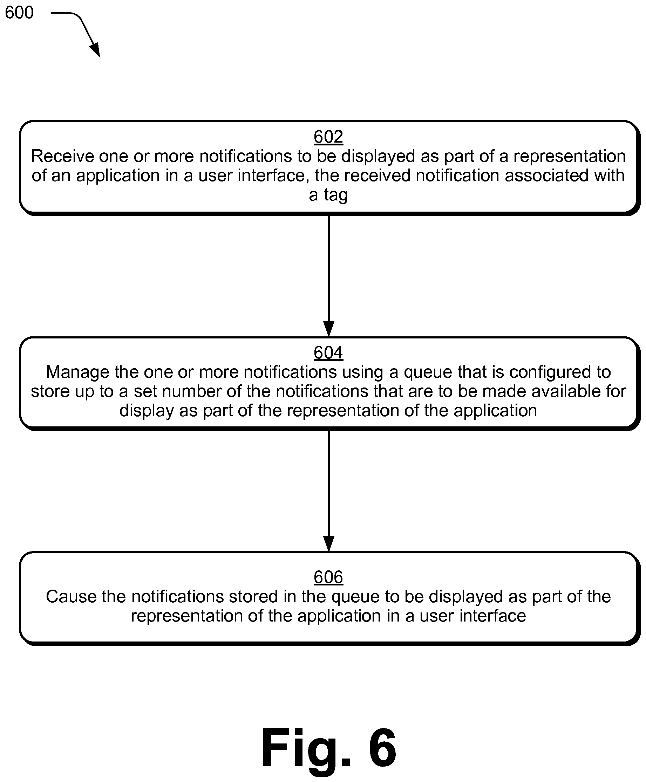

FIG. 6 depicts a procedure 600 in an example implementation in which a queue is used to manage notifications for display as part of a representation of an application. A plurality of notifications is received that are to be displayed as part of a representation of an application in a user interface (block 602). As before, the notification may be received at a notification module 114 of the client device 104 from an application executed on the client device 104, from a web service, and so on. In another example, the notification module 124 of the web service 102 may receive the notification from another web service and manage storage and distribution of the notification to the client device 104. A variety of other examples are also contemplated.

The one or more notifications are managed using a queue that is configured to store up to a set number of the notifications that are to be made available for display as part of the representation of the application (block 604). The notifications stored in the queue are then caused to be displayed as part of the representation of the application in a user interface (block 606). The set number, for instance, may be set by a developer of the application 110, may be set by an originator a notification 116, may be predefined by the notification module 114 itself, and so on.

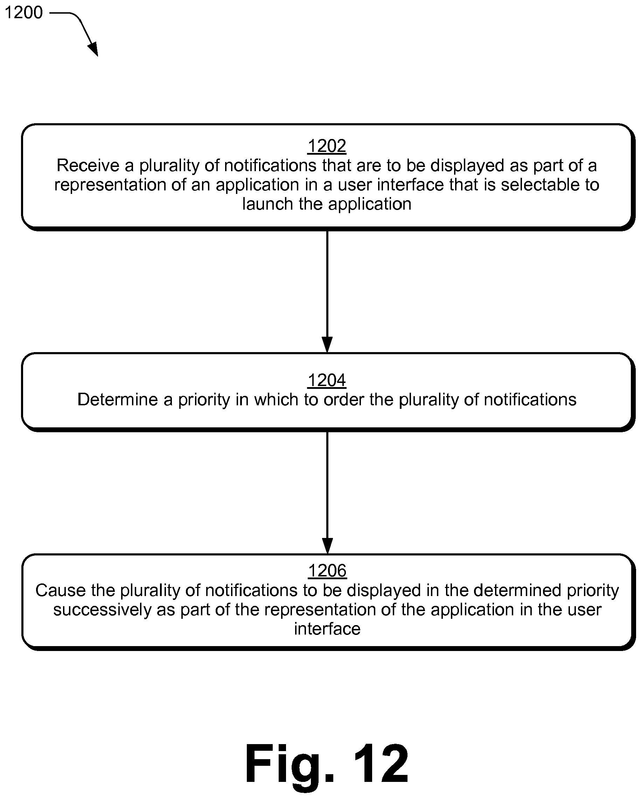

The notification module 114 may leverage the queue 402, which references an entity that is used to collect notifications, in a variety of ways, such as by employing a "first in/first out" technique, utilize tags that specify particular slots within the queue 402, and so on. In additional examples, the queue 402 may employ prioritization techniques, such as to specify a particular order in which the notifications 116 are to be cycled in the display and so on as further described in relation to FIG. 12. Thus, the queue 402 may be used to manage a number of notifications that are to be used for display as part of a representation of an application as well as an order in which the notifications are displayed.

As previously stated, although this functionality is described as implemented at the client, this functionality may also be implemented by a variety of other entities, such as the notification module 124 of a web service 102, distributed between the notification modules 114, 124, and so forth. Further, this functionality may be implemented by the notification module 114 without executing a represented application 110, thereby conserving processing and battery resources.

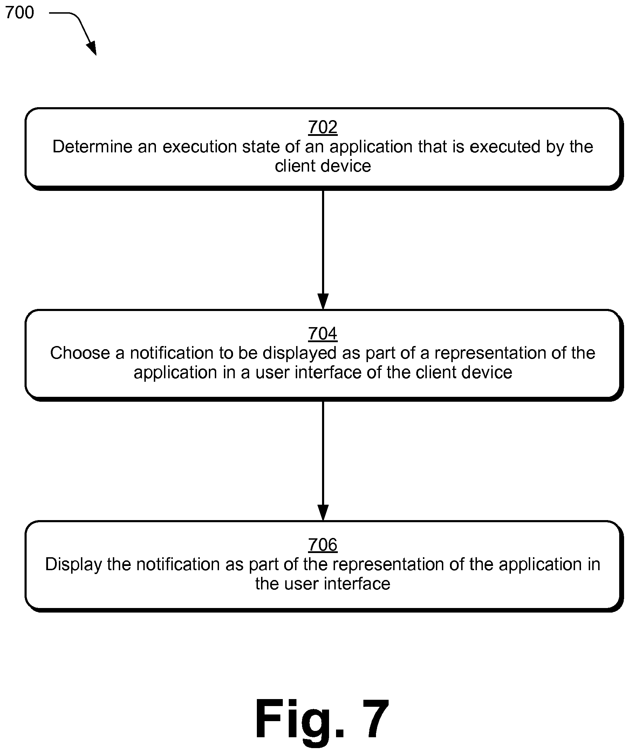

FIG. 7 depicts a procedure 700 in an example implementation in which an execution state of an application is used as a basis for determining which notifications are to be displayed as part of a representation of the application. An execution state of an application that is executed by a client device is determined (block 702). For example, the notification module 114 may monitor an application 110 that is configured to render content, such as a music-playing application. The notification module 114 may then determine that the application 110 is executed to render a particular item of content, such as a particular song.

A notification is chosen to be displayed as part of a representation of the application in a user interface of the client device (block 704). The notification is displayed as part of the representation of the application in the user interface (block 706). Continuing with the previous example, the notification module 114 may determine a name of the particular item of content that is being executed. This name may then be displayed as part of the representation of the application, such as a representation of the application that is selectable to launch the application.

For instance, a user may select a playlist in a music-playing application of the client device 104 and then navigate away from the application to locate other applications of interest. The music-playing application may continue to render content, e.g., the particular song, as the user performs this navigation. To provide context to a user regarding the state of the application, the notification may describe this execution state, which in this instance may include the rendered content, e.g., title, artist, album, and so on. A variety of other examples are also contemplated that involve display of notifications within representations of applications that describe the execution state of the application and the representation is selectable to output a user interface of that application, e.g., a window that includes the user interface being brought "to the front" such that a user may interact with the application.

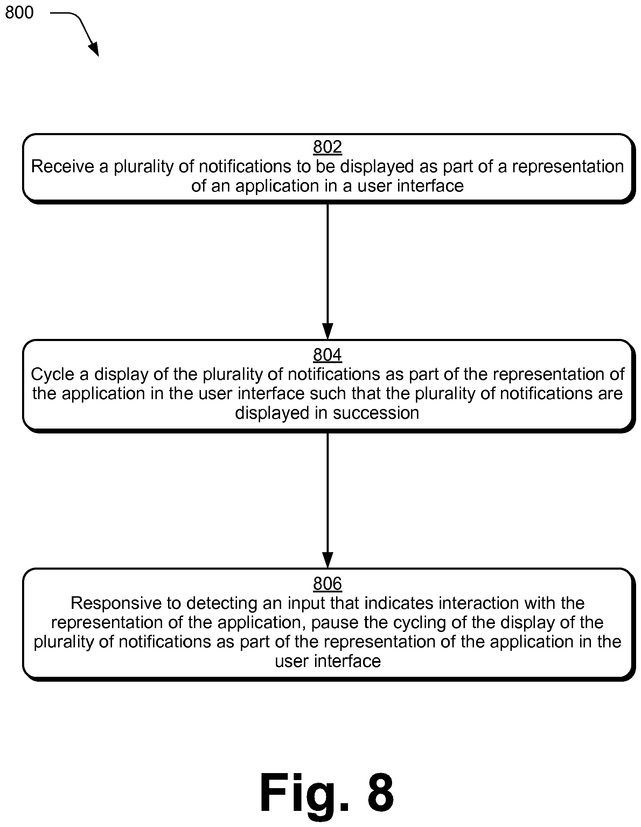

FIG. 8 depicts a procedure 800 in an example implementation in which notifications are displayed within representations of applications that are selectable to launch the application, the display cycled to display the notifications in succession. A plurality of notifications is received that are to be displayed as part of a representation of an application in a user interface (block 802). As before, the notification may be received at a notification module 114 of the client device 104 from an application executed on the client device 104, from a web service, and so on. In another example, the notification module 124 of the web service 102 may receive the notification from another web service and manage storage and distribution of the notification to the client device 104. A variety of other examples are also contemplated.

A display is cycled of the plurality of notifications as part of the representation of the application in the user interface such that the notifications are displayed in succession (block 804). As previously described in relation to FIG. 2, for instance, a representation 118 may be displayed to include notifications that are cycled in succession, one after another, to display a wide variety of information.

In this way, the notifications may expand on the amount of information that may be displayed without navigating "within" execution of the application. As previously described, this may also be performed by the notification module 114 without launching the application 110, thereby conserving battery and/or processing resources of the client device 104, servers of the web service 102, computing devices of third-party entities, and so on.

In one or more implementations, the cycling of the display of the plurality of notifications as part of the representation of the application in the user interface is paused responsive to detecting an input that indicates interaction with the representation of the application (block 806), e.g., with the application itself and/or other applications that are displayed "nearby." For example, the display of the notifications may be configured for automatic cycling by the notification module 114 without user intervention.

However, if an input is detected that involves likely interaction with the representation, such as a gesture, selection using a cursor control device, and so on, the cycling may be paused. A variety of other implementations are also contemplated, such as cycling that is performed responsive to detection of an input (e.g., "hovering" of a cursor, gesture, and so on) that indicates a likely desire to cause the cycling, which may then be paused when the detection of the input ceases. In another example, detection of an input (e.g., a gesture) may be utilized to display each of the notifications concurrently in a user interface.

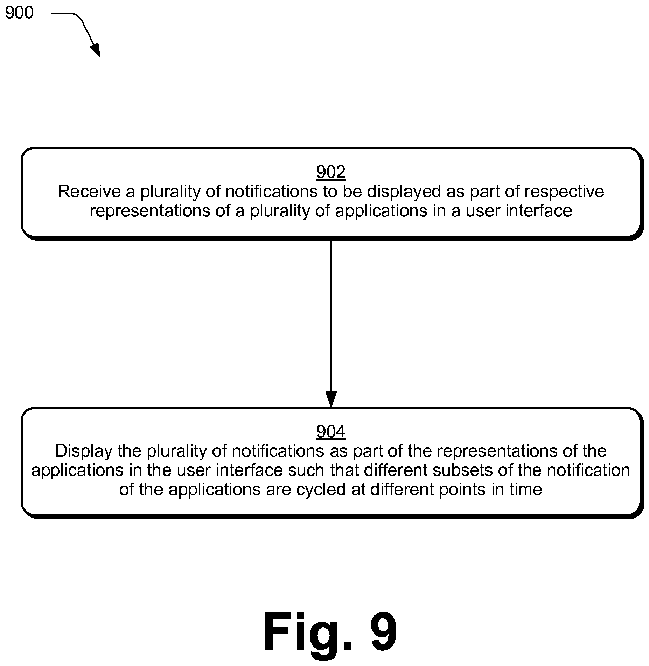

FIG. 9 depicts a procedure 900 in an example implementation in which subsets of notifications are cycled for display as part of respective representations of applications. A plurality of notifications is received to be displayed as part of respective representations of a plurality of applications in a user interface (block 902). As before, this receipt may be performed by a variety of entities and the notifications may be received from a variety of sources, such as received by the notification module 114 of the client device 104.

The plurality of notifications is displayed as part of the representations of the applications in the user interface such that different subsets of the notifications of the applications are cycled at different points in time (block 904). Referring to FIG. 1, for instance, six different representations of applications are displayed on the display device 112 of the client device 104. In an instance in which notifications are received for display for each of the representations, it may be desirable to cycle different subsets of the notifications at different points in time so as to reduce "clutter" in the display. For instance, notifications for the weather and news may be cycled at a first point in time, notifications for the pet care and directions at a second subsequent point in time, and so on. Thus, the subsets may be used to reduce distractions that may be caused if a large number of notifications were "moving" at any one point in time.

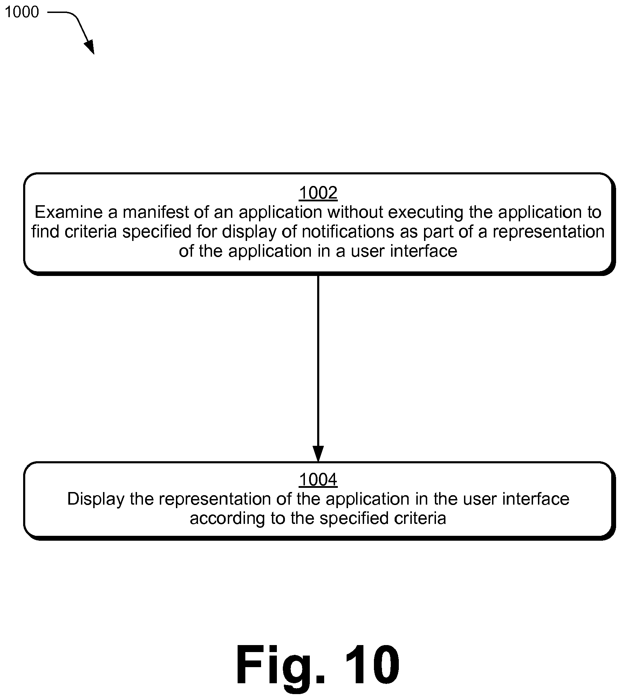

FIG. 10 depicts a procedure 100 in an example implementation in which a manifest of an application is utilized to specify criteria to be used to manage display of notifications as part of a representation of an application. A manifest is examined of an application without executing the application to find criteria specified for display of notifications as part of a representation of the application in a user interface (block 1002). For example, the notification module 114 may examine an install manifest to be used to specify a variety of criteria and may do so without launching the application. Examples of the criteria include specifying the set number to be used for a queue, whether tags (e.g., replacement or override tags) are to be supported, a time period to be used for cycling the notifications, whether the notifications are to be linked with other notifications of other applications to form predefined subsets, a source of the notifications, whether cycling is to be performed automatically and without user intervention or responsive to s user input, and so forth. Thus, the notification module 114 may enable developers of the application to specify how notifications are to be displayed as part of representations of the application. A variety of other examples are also contemplated, such as use of a function call at runtime.

The representation of the application is displayed in the user interface according to the specified criteria (block 1004). For instance, the representation may be displayed as part of an application launcher (e.g., desktop) used by the operating system 108 as a root level of a file system. A variety of other instances are also contemplated, such as at different points in the hierarchy.

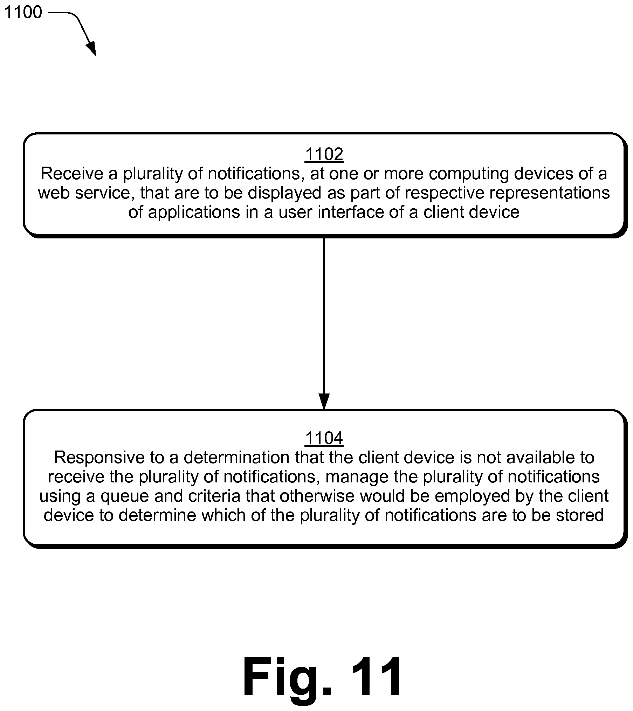

FIG. 11 depicts a procedure 1100 in an example implementation in which a web service is utilized to manage provision of notifications to a client device for display. A plurality of notifications are received at one or more computing devices of a web service, that are to be displayed as part of representations of applications in a user interface of a client device (block 1102). As previously described, a web service 102 may receive notifications 116 for communication to a client device 104 via a network 104.

Responsive to a determination that the client device is not available to receive the plurality of notifications, the plurality of notifications are managed using a queue and criteria that otherwise would be employed by the client device to determine which of the plurality of notifications are to be stored in the queue (block 1104). For example, the web service 102 may receive a communication that describes which applications are included on the client device 104 and how those applications are managed. In another example, the web service 102 may base this management on the notifications 116 themselves, e.g., tags included in the notifications. A variety of other examples are also contemplated. In this way, the notification module 124 of the web service 102 may efficiently manage notifications 116 to preserve memory space and reduce consumption of network 106 bandwidth.

FIG. 12 depicts a procedure 1200 in an example implementation in which notifications are prioritized for display as part of a representation of an application. As before, a plurality of notifications is received that are to be displayed as part of a representation of an application in a user interface that is selectable to launch the application (block 1202).

A priority in which to order the plurality of notifications is determined (block 1204). The notification module 114, for instance, may employ a "first in/first out" technique to manage which notifications are to be stored in a queue 402. In another example, priorities may be assigned by an originator of the notification, such as a hierarchical value, specific slot within a queue 402, and so on. The priority may also be determined by the notification module 114 based on a variety of other criteria, such as whether the notification has been displayed already versus whether this will be the first time.

The plurality of notifications is caused to be displayed in the determined priority successively as part of the representation of the application in the user interface (block 1206). The notification module 124, for instance, may communicate the notifications 116 and/or the priority to the client device 104. In another instance, the notification module 114 may determine the priority and cause the notifications to be rendered within the representation of the application 110. A variety of other examples are also contemplated without departing from the scope thereof.

### Conclusion

Although the invention has been described in language specific to structural features and/or methodological acts, it is to be understood that the invention defined in the appended claims is not necessarily limited to the specific features or acts described. Rather, the specific features and acts are disclosed as example forms of implementing the claimed invention.

## Claims

1. A method implemented by a client device, the method comprising:
determining an execution state of an application that is executed by the client device;
receiving (502) a notification to be displayed as part of a representation of an application in a user interface, the received notification associated with a tag specifying how the notification is to be displayed;
examining a storage of the client device to determine whether a notification in the storage has a tag matching the tag of the received notification, wherein the determining comprises comparing (504) the tag of the received notification to the tag associated with the notification in the storage by comparing text strings of the tag of the received notification with the tag associated with the notification in the storage;
responsive to a determination that the tag of the received notification matches the tag associated with the notification in the storage, replacing (506) the notification in the storage with the received notification for display as part of the representation of the application in the user interface;
choosing the received notification to be displayed as part of the representation of the application in the user interface of the client device; and
displaying (508) the notification as part of the representation of the application in the user interface.

2. The method as described in claim 1, wherein the execution state involves rendering of content and the choosing is performed to locate the notification that corresponds to the content.

3. The method as described in claim 1, wherein the execution state involves content that is currently processed by the application and the choosing is performed to locate the notification that describes this processing.

4. The method as described in claim 1, wherein the representation is displayed along with a plurality of other representations of other applications on an application launcher of the client device.

5. The method as described in claim 1, wherein the application is configured to cause rendering of music by the client device.

6. The method as described in claim 1, wherein the notification found through the choosing is different than a notification that is displayed as part of the representation of the application when then application is not executed by the client device.

7. A client device (104) comprising one or more modules configured to perform operations comprising:
a notification module (114) of the client device (104) being configured to receive a plurality of notifications (302) to be displayed as part of a representation of an application in a user interface, each of the notifications associated with a tag (304) specifying how the notification is to be displayed;
the notification module (114) being configured to examine a storage of the client device (104) to determine whether a notification (306) in the storage has a tag (304) matching a tag of a received notification of the plurality of notifications (306), wherein the determining comprises comparing the tag (304) of the received notification to the tag (304) associated with the notification (306) in the storage by comparing text strings of the tag of the received notification with the tag (304) associated with the notification (306) in the storage;
responsive to a determination that the tag (304) of the received notification matches the tag (304) associated with the notification (306) in the storage, replacing the notification (306) in the storage with the received notification for display as part of the representation of the application in the user interface; and
cycling a display of the plurality of notifications (302) as part of the representation of the application in the user interface such that the plurality of notifications are displayed in succession.

8. The client device as described in claim 7, wherein the representation is selectable to launch the application.

9. The client device as described in claim 7, wherein the representation is displayed with a plurality of other representations of other applications.

10. A computer readable medium comprising instructions which when executed on a computer perform the method of one of claims 1 to 6.

## Patentansprüche

1. Verfahren, das durch eine Client-Vorrichtung implementiert ist, wobei das Verfahren umfasst:
Bestimmen eines Ausführungszustands einer Anwendung, die von der Client-Vorrichtung ausgeführt wird;
Empfangen (502) einer Benachrichtigung, die als Teil einer Darstellung einer Anwendung in einer Benutzeroberfläche angezeigt werden soll, wobei die empfangene Benachrichtigung einem Tag zugeordnet ist, der angibt, wie die Benachrichtigung angezeigt werden soll;
Untersuchen eines Speichers der Client-Vorrichtung, um zu bestimmen, ob eine Benachrichtigung in dem Speicher ein Tag aufweist, das mit dem Tag der empfangenen Benachrichtigung übereinstimmt, wobei das Bestimmen das Vergleichen (504) des Tags der empfangenen Benachrichtigung mit dem Tag umfasst, der mit der Benachrichtigung in dem Speicher verbunden ist, indem Textzeichenketten des Tags der empfangenen Benachrichtigung mit dem Tag verglichen werden, der mit der Benachrichtigung in dem Speicher verknüpft ist;
als Reaktion auf eine Bestimmung, dass das Tag der empfangenen Benachrichtigung mit dem Tag übereinstimmt, der mit der Benachrichtigung im Speicher verknüpft ist, Ersetzen (506) der Benachrichtigung im Speicher durch die empfangene Benachrichtigung zur Anzeige als Teil der Darstellung der Anwendung in der Benutzeroberfläche;
Auswählen der empfangenen Benachrichtigung, die als Teil der Darstellung der Anwendung in der Benutzeroberfläche der Client-Vorrichtung angezeigt werden soll; und
Anzeigen (508) der Benachrichtigung als Teil der Darstellung der Anwendung in der Benutzeroberfläche.

2. Verfahren nach Anspruch 1, worin der Ausführungszustand das Rendern von Inhalten beinhaltet und die Auswahl durchgeführt wird, um die Benachrichtigung zu finden, die dem Inhalt entspricht.

3. Verfahren nach Anspruch 1, wobei der Ausführungszustand Inhalte umfasst, die derzeit von der Anwendung verarbeitet werden, und die Auswahl durchgeführt wird, um die Benachrichtigung zu finden, die diese Verarbeitung beschreibt.

4. Verfahren nach Anspruch 1, worin die Darstellung zusammen mit einer Vielzahl anderer Darstellungen anderer Anwendungen auf einem Anwendungsstarter der Client-Vorrichtung angezeigt wird.

5. Verfahren nach Anspruch 1, worin die Anwendung konfiguriert ist, um das Rendern von Musik durch die Client-Vorrichtung zu bewirken.

6. Verfahren nach Anspruch 1, worin sich die durch die Auswahl gefundene Benachrichtigung von einer Benachrichtigung unterscheidet, die als Teil der Darstellung der Anwendung angezeigt wird, wenn die Anwendung nicht von der Client-Vorrichtung ausgeführt wird.

7. Eine Client-Vorrichtung (104), die ein oder mehrere Module umfasst, die konfiguriert sind, um Operationen durchzuführen, die Folgendes umfassen:
ein Benachrichtigungsmodul (114) der Client-Vorrichtung (104), das konfiguriert ist, um eine Vielzahl von Benachrichtigungen (302) zu empfangen, die als Teil einer Darstellung einer Anwendung in einer Benutzeroberfläche anzuzeigen sind, wobei jede der Benachrichtigungen, die einem Tag (304) zugeordnet sind, angibt, wie die Benachrichtigung anzuzeigen ist;
wobei das Benachrichtigungsmodul (114) konfiguriert ist, um einen Speicher der Client-Vorrichtung (104) zu untersuchen, um zu bestimmen, ob eine Benachrichtigung (306) im Speicher ein Tag (304) aufweist, der einem Tag einer empfangenen Benachrichtigung der Vielzahl von Benachrichtigungen (306) entspricht, wobei das Bestimmen das Vergleichen des Tags (304) der empfangenen Benachrichtigung mit dem Tag (304) umfasst, der der Benachrichtigung (306) im Speicher zugeordnet ist, indem Textzeichenketten des Tags der empfangenen Benachrichtigung mit dem Tag (304) verglichen werden, der der Benachrichtigung (306) im Speicher zugeordnet ist;
als Reaktion auf eine Bestimmung, dass das Tag (304) der empfangenen Benachrichtigung mit dem Tag (304) übereinstimmt, der der Benachrichtigung (306) in dem Speicher zugeordnet ist, Ersetzen der Benachrichtigung (306) in dem Speicher durch die empfangene Benachrichtigung zur Anzeige als Teil der Darstellung der Anwendung in der Benutzeroberfläche; und
Zyklisieren einer Anzeige der Vielzahl von Benachrichtigungen (302) als Teil der Darstellung der Anwendung in der Benutzeroberfläche, so dass die Vielzahl von Benachrichtigungen nacheinander angezeigt wird.

8. Die Client-Vorrichtung nach Anspruch 7, wobei die Darstellung wählbar ist, um die Anwendung zu starten.

9. Die Client-Vorrichtung nach Anspruch 7, wobei die Darstellung mit einer Vielzahl anderer Darstellungen anderer Anwendungen angezeigt wird.

10. Computerlesbares Medium, umfassend Anweisungen, die bei Ausführung auf einem Computer das Verfahren nach einem der Ansprüche 1 bis 6 durchführen.

## Revendications

1. Procédé mis en oeuvre par un dispositif client, le procédé comprenant les étapes ci-dessous consistant à :
déterminer un état d'exécution d'une application qui est exécutée par le dispositif client ;
recevoir (502) une notification à afficher dans le cadre d'une représentation d'une application dans une interface utilisateur, la notification reçue étant associée à une étiquette spécifiant la manière dont la notification doit être affichée ;
examiner une mémoire du dispositif client en vue de déterminer si une notification dans la mémoire présente une étiquette correspondant à l'étiquette de la notification reçue, dans lequel l'étape de détermination comprend l'étape consistant à comparer (504) l'étiquette de la notification reçue à l'étiquette associée à la notification dans la mémoire, en comparant des chaînes de texte de l'étiquette de la notification reçue à l'étiquette associée à la notification dans la mémoire ;
en réponse à une détermination selon laquelle l'étiquette de la notification reçue correspond à l'étiquette associée à la notification dans la mémoire, remplacer (506) la notification, dans la mémoire, par la notification reçue, à des fins d'affichage dans le cadre de la représentation de l'application dans l'interface utilisateur ;
choisir la notification reçue à afficher dans le cadre de la représentation de l'application dans l'interface utilisateur du dispositif client ; et
afficher (508) la notification dans le cadre de la représentation de l'application dans l'interface utilisateur.

2. Procédé selon la revendication 1, dans lequel l'état d'exécution implique un rendu de contenu, et l'étape de choix est mise en oeuvre en vue de localiser la notification qui correspond au contenu.

3. Procédé selon la revendication 1, dans lequel l'état d'exécution implique un contenu qui est actuellement traité par l'application, et l'étape de choix est mise en oeuvre en vue de localiser la notification qui décrit ce traitement.

4. Procédé selon la revendication 1, dans lequel la représentation est affichée conjointement avec une pluralité d'autres représentations d'autres applications sur un lanceur d'application du dispositif client.

5. Procédé selon la revendication 1, dans lequel l'application est configurée de manière à occasionner un rendu de musique par le dispositif client.

6. Procédé selon la revendication 1, dans lequel la notification localisée par le biais de l'étape de choix est différente d'une notification qui est affichée dans le cadre de la représentation de l'application lorsque l'application n'est pas exécutée par le dispositif client.

7. Dispositif client (104) comprenant un ou plusieurs modules configurés de manière à mettre en oeuvre des opérations dans lesquelles :
un module de notification (114) du dispositif client (104) est configuré de manière à recevoir une pluralité de notifications (302) devant être affichées dans le cadre d'une représentation d'une application dans une interface utilisateur, les notifications étant chacune associées à une étiquette (304) spécifiant la manière dont la notification doit être affichée ;
le module de notification (114) est configuré de manière à examiner une mémoire du dispositif client (104) en vue de déterminer si une notification (306) dans la mémoire présente une étiquette (304) correspondant à une étiquette d'une notification reçue de la pluralité de notifications (306), dans lequel l'étape de détermination comprend l'étape consistant à comparer l'étiquette (304) de la notification reçue à l'étiquette (304) associée à la notification (306) dans la mémoire, en comparant des chaînes de texte de l'étiquette de la notification reçue à l'étiquette (304) associée à la notification (306) dans la mémoire ;
en réponse à une détermination selon laquelle l'étiquette (304) de la notification reçue correspond à l'étiquette (304) associée à la notification (306) dans la mémoire, remplacer la notification (306) dans la mémoire par la notification reçue à des fins d'affichage dans le cadre de la représentation de l'application dans l'interface utilisateur ; et
itérer un affichage de la pluralité de notifications (302) dans le cadre de la représentation de l'application dans l'interface utilisateur, de sorte que les notifications de la pluralité de notifications sont affichées de manière successive.

8. Dispositif client selon la revendication 7, dans lequel la représentation peut être sélectionnée en vue de lancer l'application.

9. Dispositif client selon la revendication 7, dans lequel la représentation est affichée avec une pluralité d'autres représentations d'autres applications.

10. Support lisible par ordinateur comprenant des instructions qui, lorsqu'elles sont exécutées sur un ordinateur, mettent en oeuvre le procédé selon l'une quelconque des revendications 1 à 6.
